# FASCICULE DE BREVET EUROPEEN

(11) **EP 3 307 662 B1**
(45) Date de publication et mention de la délivrance du brevet: **03.07.2019**
(21) Numéro de dépôt: 16730440.1
(22) Date de dépôt: 25.05.2016
(51) Int. Cl.: B65H 49/32, B65H 49/34, B65H 59/26, B65H 59/38, B29C 70/38

(54) **CANTRE POUR BOBINE DE FIBRE**
GATTER FÜR FASERSPULE
CREEL FOR FIBRE BOBBIN

(30) Priorité: 09.06.2015 FR 1501197
(43) Date de publication de la demande: 18.04.2018
(73) Titulaire: Coriolis Group, 56530 Quéven (FR)
(72) Inventeur: HAMLYN Alexander, 56270 Ploemeur (FR); CAFFIAU Johann, 56700 Hennebont (FR)
(86) Numéro de dépôt international: PCT/FR2016/000089
(87) Numéro de publication internationale: WO 2016/198755

(56) Documents cités:
- EP-A1- 2 641 725
- EP-A2- 1 123 793
- WO-A2-02/090225
- FR-A1- 2 568 234
- US-A- 3 384 322

## Description

La présente invention concerne un cantre pour bobine de fibre, ainsi qu'une machine d'application de fibres équipée d'un tel cantre, en particulier une machine de placement de fibres, et un procédé de réalisation de pièces en matériau composite au moyen d'une telle machine d'application.

Il est connu des machines d'application ou de drapage de fibres pour le drapage automatique sur un outillage de drapage, tel qu'un moule mâle ou femelle, d'une bande large formée d'une ou plusieurs fibres, en particulier des fibres continues plates de type rubans, notamment des fibres de carbone constituées d'une multitude de fils ou filaments de carbone.

Ces machines comprennent classiquement une tête d'application de fibres comportant des moyens de guidage pour guider la ou les fibres vers la surface de drapage. Ces machines comprennent en outre des moyens de stockage de fibres, des moyens d'acheminement pour acheminer des fibres desdits moyens de stockage vers la tête, et éventuellement un système de déplacement de la tête de drapage. Dans le cas d'une bande formée de plusieurs fibres, appelées également mèches, les moyens de guidage de la tête permettent d'amener vers la surface de drapage les fibres sous la forme d'une bande, dans laquelle les fibres sont disposées parallèlement sensiblement bord à bord, ou avec un espacement défini entre deux fibres adjacentes. Pour un drapage au contact des fibres, ces machines, appelées classiquement machines de placement de fibres, comprennent une tête équipée d'un rouleau de compactage destiné à venir en contact contre la surface de drapage pour appliquer la bande, les moyens de guidage guidant les fibres vers le rouleau sous la forme d'une bande.

La tête comprend classiquement, tel que décrit notamment dans le document brevet WO2008132299, des moyens de coupe pour couper individuellement chaque fibre, des moyens de réacheminement pour réacheminer individuellement chaque fibre venant d'être coupée, afin de pouvoir à tout moment stopper et reprendre l'application d'une fibre, ainsi que choisir la largeur de la bande, et de préférence des moyens de blocage afin de bloquer une fibre venant d'être coupée.

Les fibres appliquées peuvent être des fibres pré-imprégnées d'une résine thermoplastique ou thermodurcissable, des fibres sèches, et/ou des fibres sèches munies d'un liant, classiquement appelé « binder », pour conférer un caractère collant aux fibres lors du drapage.

Dans le cas de fibres conditionnées sous forme de bobines, les moyens de stockage de fibres comprennent classiquement un cantre pour recevoir des bobines de fibres et délivrer les fibres indépendamment les unes des autres. Pour chaque bobine, le cantre comprend un module comportant un mandrin, motorisé ou non, pour la réception d'une bobine de fibre, et un système de contrôle de tension de la fibre agissant sur la rotation du mandrin en fonction de la tension dans la fibre déroulée. Ce système de contrôle de la tension comprend classiquement un système de rouleau oscillant ou de poulie oscillante, la rotation du mandrin étant contrôlée en fonction de la position du rouleau oscillant ou poulie oscillante.

Pour un contrôle précis de la tension, le débattement du rouleau oscillant doit être suffisamment important. Pour atteindre des vitesses de drapage importantes, par exemple de l'ordre de 1 m/s, ainsi que des opérations de coupe et de réacheminement à la volée, un débattement minimal est nécessaire. En outre, la distance entre la bobine et le système de contrôle de tension doit être suffisamment importante pour dérouler correctement les bobines, sans faire de tour.

Par ailleurs, pour atteindre des productivités élevées, le cantre doit pouvoir recevoir des bobines de taille importante, par exemple de l'ordre de 15 kg.

Enfin, pour chaque bobine, la fibre peut être enroulée sur la bobine avec un film de protection sur l'une de ses faces, de sorte que les spires de fibre enroulées sur la bobine soient séparées les unes des autres. Ce film de protection, appelé également film intercalaire ou séparateur, évite que les spires de fibre ne collent les unes aux autres et garantit un déroulement correct de la fibre, en particulier dans le cas de fibres pré-imprégnées. Le cantre doit alors comprendre un système de récupération associé à chaque bobine de fibre, ce système de récupération comprenant classiquement un mandrin sur lequel est placé une bobine ou rouleau afin de récupérer le film de protection au fur et à mesure que la fibre est débobinée.

De ce fait, les modules peuvent s'avérer relativement encombrants, et le cantre résultant qui comporte plusieurs module côte à côte, parfois jusqu'à 24 ou 32 modules, est volumineux.

Il est connu par le document EP 1 123 793 un cantre dans lequel chaque module comprend un premier mandrin pour la réception d'une bobine de fibre, monté rotatif autour d'un premier axe de rotation, et un système de contrôle de tension de la fibre comprenant une poulie de déroulement montée rotative autour d'un deuxième axe de rotation, un bras oscillant monté pivotant autour d'un troisième axe de rotation et portant à son extrémité une poulie oscillante montée rotative autour d'un quatrième axe, et une poulie de renvoi montée rotative autour d'un cinquième axe de rotation, lesdits axes de rotation étant tous parallèles entre eux, la fibre déroulée de la bobine passant sur la poulie de déroulement, la poulie oscillante puis la poulie de renvoi, la rotation du premier mandrin étant contrôlée en fonction de la position angulaire du bras oscillant.

Le document WO 02/090225 décrit un module similaire, la rotation du premier mandrin étant contrôlée par un capteur disposé en aval de la poulie de renvoi. Dans le document FR 2 568 234, la poulie de déroulement et la poulie oscillante précitées sont remplacées par des rouleaux.

Le document US 3 384 322 décrit un module comprenant un premier mandrin pour la réception d'une bobine de fibre, monté rotatif autour d'un premier axe de rotation, et un système de contrôle de tension comprenant une poulie de déroulement monté rotative autour d'un deuxième axe de rotation parallèle au premier axe, un bras oscillant monté pivotant autour d'un troisième axe de rotation perpendiculaire au premier axe et au deuxième axe, et portant à son extrémité une poulie oscillante montée rotative autour d'un quatrième axe parallèle au troisième axe, la fibre déroulée de la bobine passant sur la poulie de déroulement et la poulie oscillante.

Le but de la présente invention est de proposer une solution visant à pallier au moins l'un des inconvénients précités, et notamment de proposer un cantre qui présente un encombrement raisonnable tout en garantissant un contrôle de tension de la fibre, en particulier dans le cas d'une utilisation dans une machine de placement de fibres.

A cet effet, la présente invention propose un cantre pour bobine de fibre comprenant au moins un module pour une bobine de fibre, chaque module comprenant au moins un premier mandrin pour la réception d'une bobine de fibre, monté rotatif autour d'un premier axe de rotation sur une structure support du cantre, permettant de dérouler une bobine de fibre, et un système de contrôle de tension de la fibre agissant sur la rotation du premier mandrin en fonction de la tension dans la fibre déroulée, caractérisé en ce que, pour chaque module, le système de contrôle de tension comprend un rouleau de déroulement monté rotatif autour d'un deuxième axe de rotation parallèle au premier axe, un bras oscillant monté pivotant autour d'un troisième axe de rotation perpendiculaire au premier axe et au deuxième axe, et portant à son extrémité une poulie oscillante montée rotative autour d'un quatrième axe parallèle au troisième axe, et une poulie de renvoi montée rotative autour d'un cinquième axe de rotation, parallèle au quatrième axe, disposée entre le rouleau de déroulement et la poulie oscillante, la fibre déroulée de la bobine passant sur le rouleau de déroulement, la poulie oscillante puis la poulie de renvoi, la rotation du premier mandrin étant contrôlée en fonction de la position angulaire du bras oscillant.

Selon l'invention, le positionnement du bras oscillant perpendiculairement au premier mandrin portant la bobine, permet d'obtenir, dans un encombrement réduit,
- un débattement angulaire important du bras oscillant, et ainsi, une bonne précision de contrôle de la rotation du mandrin, en particulier à des vitesses de défilement de fibre importantes ;
- une distance importante entre le rouleau de déroulement et la poulie oscillante garantissant un déroulement ou détrancannage efficace de la fibre, sans tour dans la fibre.

Le détrancannage de la fibre sur un angle proportionnel à la longueur de la bobine, ainsi que le contrôle de tension de la fibre sont réalisés sur un chemin de fibre qui est parallèle à l'axe du premier mandrin. Cet agencement des éléments d'un module permet d'imbriquer les modules d'un cantre, et ainsi de limiter l'encombrement du cantre.

Selon un mode de réalisation, pour chaque module, le premier axe du premier mandrin et le deuxième axe du rouleau de déroulement sont parallèles à une première direction, le deuxième axe du rouleau de déroulement est décalé du premier axe du premier mandrin dans une deuxième direction, perpendiculaire à la première direction, le quatrième axe de la poulie oscillante et le cinquième axe de la poulie de renvoi sont décalés par rapport au rouleau de déroulement dans une troisième direction perpendiculaire aux première et deuxième directions.

Selon un mode de réalisation, la poulie oscillante et la poulie de renvoi sont disposées selon un plan sensiblement tangent à la surface cylindrique du rouleau de déroulement.

Selon un mode de réalisation, les troisième, quatrième et cinquième axes sont disposés selon la deuxième direction qui est sensiblement horizontale, le chemin de fibre entre le rouleau de déroulement, la poulie oscillante et la poulie de renvoi s'effectuant de préférence selon un plan sensiblement vertical.

Selon un mode de réalisation, le cantre comprend au moins deux modules disposés en sens inverse dans la troisième direction.

Selon un mode de réalisation, chaque module comprend un moteur apte à entraîner en rotation le premier mandrin, le moteur étant contrôlé par une unité de commande pour entraîner en rotation le premier mandrin en fonction de la position du bras oscillant.

Selon un mode de réalisation, chaque module comprend un vérin relié au bras oscillant, monté rotatif sur la structure support par un premier élément parmi son corps et l'extrémité de sa tige, et assemblé de manière rotative au bras oscillant par l'autre élément, ledit vérin étant équipé d'un capteur de position ou codeur, détectant par exemple la position du piston, la rotation du premier mandrin, en particulier la rotation du moteur précité, étant contrôlée en fonction de la position du vérin détectée par ledit capteur de position.

Selon un mode de réalisation, chaque module comprend en outre un capteur de diamètre apte à détecter le diamètre de la bobine de fibre placée sur le premier mandrin, le moteur étant contrôlé par une unité de commande pour entraîner en rotation le premier mandrin en fonction du diamètre détecté par ledit capteur de diamètre.

Selon un mode de réalisation, chaque module comprend en outre un second mandrin pour la réception d'une bobine pour le rembobinage du film séparateur d'une bobine de fibre, ledit second mandrin étant couplé au premier mandrin pour son entraînement en rotation, par exemple au moyen d'une courroie en intercalant un système limiteur de couple. Ledit second mandrin est avantageusement disposé dans la deuxième direction entre le premier mandrin et le rouleau de déroulement.

Selon un mode de réalisation, le rouleau de déroulement est équipé d'une barre longitudinale pour guider la fibre sur ledit rouleau de déroulement, ladite barre étant de préférence déplaçable entre une position écartée pour guider ladite fibre et une position de pincement pour pincer la fibre entre la barre et le rouleau, notamment lors d'opérations de raboutage.

La présente invention a également pour objet une machine d'application de fibres caractérisée en ce qu'elle comprend un cantre tel que défini précédemment. La machine d'application selon l'invention peut être une machine de placement de fibres pour l'application au contact, sur une surface d'application, d'une bande large formée d'une ou plusieurs fibres ou mèches, ou une machine pour l'application sans contact, par exemple une machine d'enroulement filamentaire pour l'application d'une bande formée d'une ou plusieurs fibres ou mèches. La machine est de préférence une machine de placement de fibres, comprenant une tête de placement de fibres, telle que décrite précédemment, avec un rouleau de compactage, la machine comprenant de préférence un système de déplacement de la tête.

La présente invention a également pour objet un procédé de réalisation de pièces en matériau composite comprenant le drapage de fibres sur une surface d'application, notamment d'un outillage, caractérisé en ce que ledit drapage est réalisé au moyen d'une machine d'application de fibres comprenant un cantre tel que défini précédemment, en particulier une machine de placement de fibres, chaque fibre appliquée étant déroulée depuis une bobine de fibre placée sur un premier mandrin du cantre monté rotatif autour d'un premier axe de rotation, et passant dans un système de contrôle de tension associé audit premier mandrin, ledit système de contrôle comprenant un rouleau de déroulement monté rotatif autour d'un deuxième axe de rotation parallèle au premier axe, un bras oscillant monté pivotant autour d'un troisième axe de rotation perpendiculaire au premier axe et au deuxième axe, et portant à son extrémité une poulie oscillante montée rotative autour d'un quatrième axe parallèle au troisième axe, et une poulie de renvoi montée rotative autour d'un cinquième axe de rotation, parallèle au quatrième axe, disposée entre le rouleau de déroulement et la poulie oscillante, la fibre déroulée de la bobine passant sur le rouleau de déroulement, la poulie oscillante puis la poulie de renvoi, la rotation du premier mandrin étant contrôlée en fonction de la position du bras oscillant.

L'invention sera mieux comprise, et d'autres buts, détails, caractéristiques et avantages apparaîtront plus clairement au cours de la description explicative détaillée qui va suivre d'un mode de réalisation particulier actuellement préféré de l'invention, en référence aux dessins schématiques annexés, sur lesquels :
- la figure 1 est une vue schématique de face d'un cantre selon l'invention, comprenant plusieurs modules, chacun prévu pour recevoir une bobine de fibre ;
- la figure 2 est une vue schématique en perspective d'un module du cantre de la figure 1 ; et
- les figures 3 et 4 sont respectivement une vue de face et une vue de côté du module de la figure 2.

Les figures illustrent un mode de réalisation d'un cantre 1 selon l'invention, faisant par exemple partie d'une machine de placement de fibre, connue en soi, par exemple telle que décrite dans le document brevet WO2012/160270.

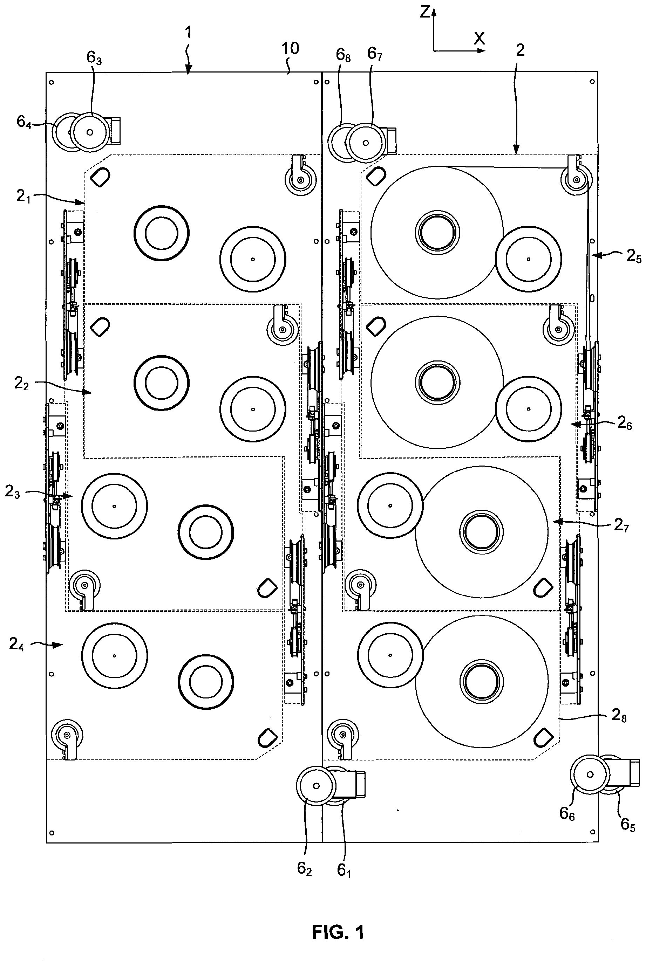

Le cantre 1 comprend une structure formée ici d'une paroi support 10 verticale, en une ou plusieurs parties, montée sur un châssis (non représenté). Le cantre est prévu ici pour recevoir huit bobines de fibre, en particulier des bobines de fibre munies d'un film de protection. Chaque bobine de fibre est obtenue par une opération d'enroulement ou trancannage consistant à enrouler régulièrement la fibre spire par spire et couche par couche sur toute la longueur d'une bobine. Le cantre comprend un ensemble ou module pour chaque bobine de fibre. Les modules portent la référence générale 2, et sont référencés individuellement de 2₁ à 2₈ sur la figure 1.

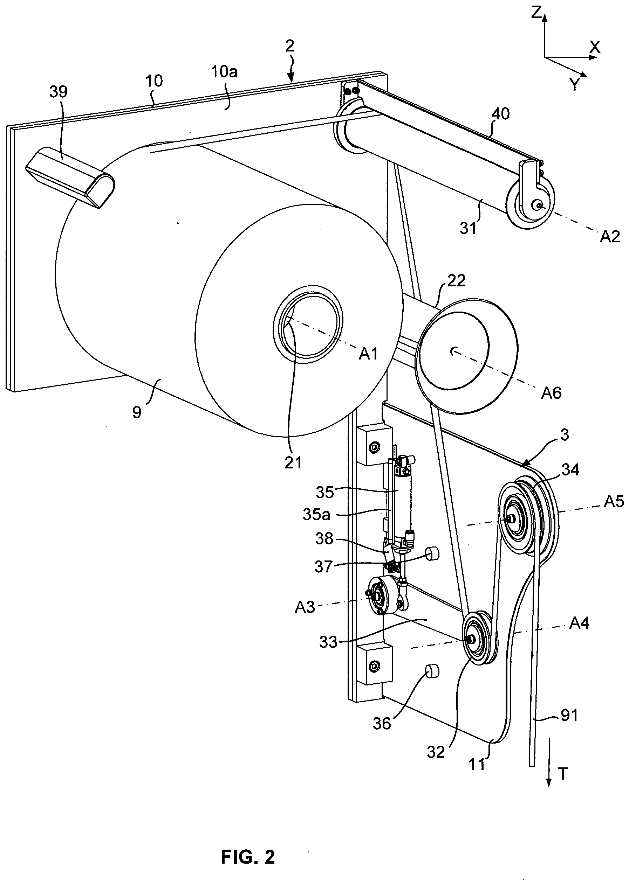

En référence aux figures 2, 3 et 4, chaque module 2 comprend un premier mandrin 21 pour recevoir une bobine 9 de fibre, un second mandrin 22 pour le rembobinage du film de protection, et un système de contrôle de tension 3. Le système de contrôle de tension comprend un rouleau 31, dit de déroulement ou de détrancannage, une poulie 32 dite oscillante montée à l'extrémité d'un bras oscillant 33 et une poulie de renvoi 34.

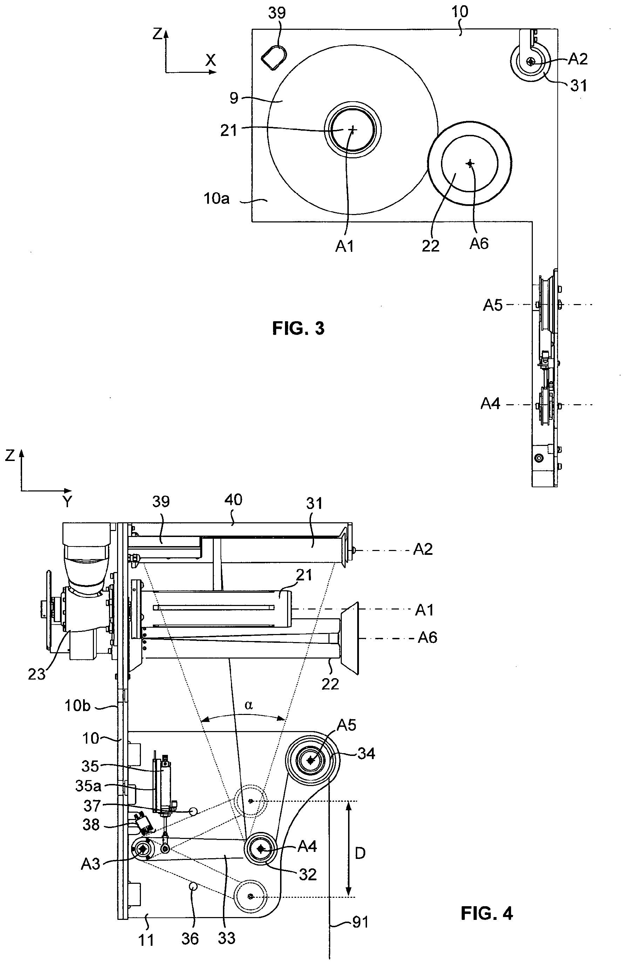

Le premier mandrin 21 s'étend perpendiculairement à la face avant 10a de la paroi support 10, et est relié à l'extrémité de l'arbre d'entraînement d'un moteur 23 (Fig. 4) pour son entraînement en rotation autour de son axe A1, disposé perpendiculairement à la paroi support 10. Le mandrin est équipé de moyens de blocage, par exemple de type pneumatiques, pour bloquer en position la bobine sur le mandrin. Le moteur est fixé sur la face arrière 10b de la paroi support. On définit trois directions orthogonales X, Y et Z qui seront utilisées dans les figures et dans la description, Y étant la direction de l'axe A1, et X et Z étant respectivement les directions horizontale et verticale.

Le rouleau 31 de déroulement du système de contrôle de tension est décalé du premier mandrin 21 dans la direction X horizontale. Le rouleau de déroulement est monté libre en rotation autour de son axe A2 sur la paroi support, l'axe A2 étant parallèle à l'axe A1. La longueur de ce rouleau de déroulement correspond sensiblement à la longueur maximale de bobine pouvant être reçue par le premier mandrin 21.

Le bras oscillant 33 est monté libre en rotation par une première extrémité autour d'un axe A3, perpendiculaire aux axes A1 et A2, sur une plaque support 11 qui est assemblée sur la paroi support 10 et qui s'étend perpendiculairement depuis la face avant 10a de la paroi support dans la direction Y. L'axe A3 est décalé dans la direction Z par rapport au rouleau de déroulement, et est disposé à proximité de la paroi support. Le bras oscillant s'étend perpendiculairement à la paroi support et porte à sa deuxième extrémité la poulie 32 oscillante, montée mobile en rotation autour d'un axe A4 qui est parallèle à l'axe A3. La poulie de renvoi 34 est montée sur la plaque support, mobile en rotation autour d'un axe A5 qui est parallèle à l'axe A4. Dans la direction Z, la poulie de renvoi est disposée entre le rouleau de déroulement 31 et la poulie oscillante 32. Un vérin 35 est monté pivotant sur la plaque support par son corps de vérin et l'extrémité libre de sa tige est assemblée de manière pivotante au bras, les axes de pivotement du vérin étant parallèles à l'axe A3. Le vérin est équipé d'un capteur de position 35a, par exemple de type magnétique, pour détecter la position du piston du vérin qui est fonction de la position angulaire du bras. Le capteur 35a est relié à une unité de commande de la machine de placement de fibre qui, en fonction du signal de position du vérin, pilote dynamiquement le moteur pour faire varier la vitesse de rotation du premier mandrin. Le bras oscillant est mobile en rotation entre une première butée 36 et une deuxième butée 37.

Tel qu'illustré aux figures 2 et 4, le chemin de fibre est le suivant : la fibre 91 déroulée de la bobine passe sur le rouleau de déroulement 31, sur la poulie oscillante 32, puis sur la poulie de renvoi 34. Le vérin est un vérin de type faible frottement, connu en soi, alimenté en air sous pression réglable, de manière à être pré-chargé pour assurer un retour du bras en butée contre la première butée 36 en l'absence de tension dans la fibre. En référence à la figure 3, la poulie oscillante 32 et la poulie de renvoi 34 sont disposées selon un même plan vertical qui est sensiblement tangent à la surface cylindrique du rouleau de déroulement 31.

Lorsque la fibre n'est pas déroulée, le bras est en butée contre la première butée. Lorsqu'une tension est appliquée sur la fibre, telle qu'illustrée par la flèche référencée T, par exemple lorsque la fibre est drapée par la tête de placement de fibres, le bras pivote vers le haut dans le cas de la figure 4, et le moteur est contrôlé par l'unité de commande pour débobiner la bobine de fibre en fonction de la position du vérin détectée par le capteur de position. Lors du drapage, la tension de la fibre peut varier, notamment lors des accélérations ou décélérations de la fibre. Lors de ces variations, le bras pivote et le moteur est contrôlé dynamiquement en vitesse en fonction de la position du vérin. En fonctionnement, le moteur est asservi dynamiquement de manière à maintenir le bras dans une position sensiblement horizontale entre les deux butées, tel qu'illustré à la figure 4. Lorsque la tension dans la fibre augmente, le bras pivote vers le haut, et le système de contrôle augmente la vitesse de rotation du moteur. Lorsque le bras pivote vers le bas, le système de contrôle réduit la vitesse de rotation du moteur. Les positions extrêmes du bras en appui contre les butées 36, 37 sont illustrées en traits discontinus sur la figure 4.

Un second capteur 38, dit de sur-tension ou de sécurité, est prévu pour détecter lorsque le bras est en butée contre la deuxième butée 37. Lorsque ce capteur détecte la venue en butée contre la deuxième butée, l'unité de commande stoppe le déplacement de la tête de placement.

A titre d'exemple, le débattement angulaire du bras oscillant entre les deux butées 36, 37 est défini de manière à obtenir un débattement D linéaire de la poulie oscillante dans la direction Z compris entre 100 et 150 millimètres (mm), par exemple de 125 mm. Un tel débattement correspondant à une longueur de fibre déroulée importante, de plus de 250 mm, garantissant un asservissement efficace du moteur du premier mandrin à des vitesses élevées de drapage, par exemple de l'ordre de 1 m/s. La distance entre le rouleau de déroulement 31 et la poulie oscillante 32 est définie pour assurer un détrancannage efficace de la fibre sur un angle α, sans faire de tour dans la fibre. A titre d'exemple, pour des bobines de l'ordre de 400 mm de longueur, la distance entre le rouleau de déroulement et l'axe A3 du bras oscillant est comprise entre 600 et 800 mm. Par rapport à la paroi support 10, la poulie de renvoi 34 est décalée dans la direction Y au-delà de la poulie oscillante 32, pour permettre le détrancannage de la fibre sur un angle α, sans venir en contact avec la poulie de renvoi.

Chaque module 2 comprend en outre un capteur 39 permettant de détecter le diamètre de la bobine qui varie en cours de drapage. Le capteur, par exemple un capteur à ultrason, est connecté à l'unité de commande qui pilote le moteur 23 pour définir la vitesse de rotation de la bobine en fonction de son diamètre.

Le second mandrin 22 est relié au premier mandrin 21 par une courroie pour son entraînement en rotation afin de rembobiner le film de protection au fur et à mesure du déroulement de la fibre. La liaison entre les deux mandrins 21, 22 avec la courroie est effectuée en intercalant un système limiteur de couple, connu en soi, afin de garantir l'enroulement de l'intégralité du film de protection quel que soit le diamètre de la bobine de fibre et le diamètre de la bobine de film de protection.

Le rouleau de déroulement 31 est équipé d'une barre longitudinale 40 définissant un passage entre ladite barre et la surface du rouleau de déroulement dans lequel passe la fibre. La barre permet de maintenir la fibre sur le rouleau et d'éviter un retournement de cette dernière. Selon un mode de réalisation, la barre est déplaçable via des moyens d'actionnement (non représentés) entre une position écartée et une position de pincement pour pincer la fibre entre la barre et le rouleau, et ainsi la bloquer pour effectuer des opérations de raboutage. Lorsque la bobine doit être changée, la fibre est bloquée via la barre amenée en position de pincement. La fibre est coupée en amont de la barre et peut ensuite être raboutée à l'extrémité d'une fibre d'une nouvelle bobine de fibre placée sur le premier mandrin.

En référence à la figure 1, le cantre comprend huit modules disposés en deux colonnes de quatre modules superposés. Chaque module est délimité par des traits discontinus sur la figure 1. La première colonne comprend un premier module 2₁ qui est orienté dans la direction Z de sorte que la poulie oscillante et la poulie de renvoi soient disposées en dessous du rouleau de déroulement, la fibre sortant de la poulie de renvoi étant orientée vers le bas. Le deuxième module 2₂ est orienté comme le premier module, et est disposé sous ce dernier, avec un décalage dans la direction X, pour un positionnement à gauche de la plaque support du premier module portant la poulie oscillante et la poulie de renvoi. Les premiers mandrins du premier module et du deuxième module sont alignés verticalement, comme leurs seconds mandrins, le rouleau de déroulement du deuxième module étant quant à lui décalé horizontalement vers la gauche par rapport à celui du premier module. Le troisième module 2₃ est disposé en dessous du deuxième module et est orienté dans la direction Z dans le sens inverse par rapport aux premier et deuxième modules, sa poulie oscillante et sa poulie de renvoi étant disposées au-dessus de son rouleau de déroulement, la fibre sortant de sa poulie de renvoi allant vers le haut. Son premier mandrin et son deuxième mandrin sont positionnés à gauche des plaques support du premier et du deuxième module, et sa poulie oscillante et sa poulie de renvoi sont positionnées à gauche des premier et second mandrins des premier et deuxième modules. Le quatrième module 2₄ est disposé sous le troisième module et est orienté dans le même sens que ce dernier.

La seconde colonne comprend quatre modules imbriqués les uns les autres comme ceux de la première colonne, les deux modules supérieurs étant orientés dans la direction Z de sorte que les fibres déroulées depuis ces modules soient récupérées en bas du cantre, les deux modules inférieurs étant orientés en sens inverse dans la direction Z, leurs fibres étant récupérées vers le haut du cantre.

Les fibres sortant des modules 2₁, 2₂, 2₅, 2₆ supérieurs des deux colonnes s'étendent vers bas et passent chacune sur une poulie de renvoi inférieure 6₁, 6₂, 6₅, 6₆. Les fibres sortant des modules 2₃, 2₄, 2₇, 2₈ supérieurs des deux colonnes s'étendent vers haut et passent chacune sur une poulie de renvoi inférieure 6₃, 6₄, 6₇, 6₈. Ces poulies sont montées sur des barres horizontales fixées à la paroi support. en sortie des poulies de renvoi inférieures et supérieures, les fibres s'étendent ici vers la droite du cantre, elles seront ensuite regroupées, par exemple en haut du cantre pour leur sortie du cantre et leur acheminement vers la tête de placement de fibres.

Les éléments des modules peuvent être montés directement sur la paroi support. Tel qu'illustré à la figure 1, la paroi support est en deux parties, les éléments des modules d'une même colonne sont montés sur une même partie de paroi support. Le cantre est avantageusement intégré dans une armoire qui sera de préférence régulée en hygrométrie et en température. Le cantre peut être disposé au sol à proximité de la tête de placement, par exemple dans le cas d'un robot poly-articulé fixé au sol portant la tête de placement de fibres, ou peut être monté sur un élément du système de déplacement de la tête, par exemple sur un des chariots d'un robot cartésien portant la tête, ou sur un chariot suiveur coulissant sur l'axe linéaire d'un robot polyarticulé portant la tête. Les moteurs des premiers mandrins sont commandés indépendamment les uns des autres par l'unité de commande de la machine de placement de fibres. Le cantre peut intégrer un système limiteur de tension, tel que décrit dans le document brevet EP 1 855 870, notamment lorsque les moyens d'acheminement de fibres sont formés de tubes flexibles.

Le cantre avec mandrins motorisés peut être chargé avec de grosses bobines de fibres, par exemple de l'ordre de 15kg. Le cantre selon l'invention peut être utilisé pour stocker et distribuer des bobines de fibres de différentes natures. A titre d'exemple non limitatif, les fibres sont des fibres de carbone, des fibres de verre, des fibres d'aramide, des fibres de polyéthylène, et/ou des fibres par exemple naturelles, telles que par exemple des fibres de lin. Les fibres peuvent être des fibres pré-imprégnées d'une résine thermoplastique ou thermodurcissable, des fibres sèches, et/ou des fibres sèches munies d'un liant, pour conférer un caractère collant aux fibres lors du drapage. A titre d'exemple, les fibres ont une largeur de 1/8, 1/4 ou 1/2 pouce.

Selon un autre mode de réalisation, dans le cas de bobine de fibre de plus petite taille, par exemple de l'ordre de 3-4 kg, chaque premier mandrin est monté libre en rotation sur la paroi support et est par exemple est équipé d'un système de freinage automatique asservi en fonction de la tension de la fibre. Le système de freinage est commandé en fonction de la position du bras oscillant, la commande étant par exemple de type mécanique, pneumatique ou électrique. Selon un mode de réalisation, le signal du capteur de position équipant le vérin précité est utilisé pour commander le système de freinage.

Bien que l'invention ait été décrite en liaison avec un mode de réalisation particulier, il est bien évident qu'elle n'y est nullement limitée. L'étendue de la protection de l'invention est limitée uniquement par la portée des revendications.

## Revendications

1. Cantre pour bobine de fibre comprenant au moins un module (2) pour une bobine (9) de fibre, chaque module comprenant au moins un premier mandrin (21) pour la réception d'une bobine de fibre, monté rotatif autour d'un premier axe (A1) de rotation, et un système de contrôle de tension (3) de la fibre, **caractérisé en ce que**, pour chaque module, le système de contrôle de tension comprend
- un rouleau de déroulement (31) monté rotatif autour d'un deuxième axe de rotation (A2) parallèle au premier axe (A1),
- un bras oscillant (33) monté pivotant autour d'un troisième axe (A3) de rotation perpendiculaire au premier axe et au deuxième axe, et portant à son extrémité une poulie oscillante (32) montée rotative autour d'un quatrième axe (A4) parallèle au troisième axe, et
- une poulie de renvoi (34) montée rotative autour d'un cinquième axe (A5) de rotation, parallèle au quatrième axe, disposée entre le rouleau de déroulement (31) et la poulie oscillante (32),
la fibre (91) déroulée de la bobine passant sur le rouleau de déroulement (31), la poulie oscillante (32) puis la poulie de renvoi (34), la rotation du premier mandrin (21) étant contrôlée en fonction de la position du bras oscillant (33).

2. Cantre selon la revendication 1, **caractérisé en ce que**, pour chaque module, le premier axe (A1) du premier mandrin (31) et le deuxième axe (A2) du rouleau de déroulement (31) sont parallèles à une première direction (Y),
- le deuxième axe (A2) du rouleau de déroulement est décalé du premier axe (A1) du premier mandrin dans une deuxième direction (X), perpendiculaire à la première direction,
- le quatrième axe (A4) de la poulie oscillante (32) et le cinquième axe (A5) de la poulie de renvoi (34) sont décalés par rapport au rouleau de déroulement dans une troisième direction (Z) perpendiculaire aux première et deuxième directions.

3. Cantre selon la revendication 1 ou 2, **caractérisé en ce que** la poulie oscillante (32) et la poulie de renvoi (34) sont disposées selon un plan sensiblement tangent à la surface cylindrique du rouleau de déroulement (31).

4. Cantre selon l'une des revendications 1 à 3, **caractérisé en ce que** les troisième, quatrième et cinquième axes (A3, A4, A5) sont disposés selon la deuxième direction (X) qui est sensiblement horizontale, le chemin de fibre entre le rouleau de déroulement (31), la poulie oscillante (32) et la poulie de renvoi (34) s'effectuant selon un plan sensiblement vertical.

5. Cantre selon l'une des revendications 2 à 4, **caractérisé en ce que** le cantre comprend au moins deux modules disposés en sens inverse dans la troisième direction (Z).

6. Cantre selon l'une des revendications 1 à 5, **caractérisé en ce que** chaque module (2) comprend un moteur (23) apte à entraîner en rotation le premier mandrin (21), le moteur étant contrôlé pour entraîner en rotation le premier mandrin (21) en fonction de la position du bras oscillant (33).

7. Cantre selon l'une des revendications 1 à 6, **caractérisé en ce que** chaque module (2) comprend un vérin (35) relié au bras oscillant, ledit vérin étant équipé d'un capteur de position (35a), la rotation du premier mandrin (21) étant contrôlée en fonction de la position du vérin détectée par ledit capteur de position.

8. Cantre selon l'une des revendications 1 à 7, **caractérisé en ce que** chaque module (2) comprend en outre un capteur de diamètre (39) apte à détecter le diamètre de la bobine (9) de fibre placée sur le premier mandrin (21), le moteur (31) étant contrôlé pour entraîner en rotation le premier mandrin (21) en fonction du diamètre détecté par ledit capteur de diamètre (33).

9. Cantre selon l'une des revendications 1 à 8, **caractérisé en ce que** chaque module (2) comprend en outre un second mandrin (22) pour la réception d'une bobine pour le rembobinage du film séparateur d'une bobine de fibre.

10. Cantre selon l'une des revendications 1 à 9, **caractérisé en ce que** le rouleau de déroulement (31) est équipé d'une barre longitudinale (40) pour guider la fibre sur ledit rouleau de déroulement, ladite barre étant déplaçable entre une position écartée et une position de pincement pour pincer la fibre entre la barre et le rouleau lors d'opérations de raboutage.

11. Machine d'application de fibres, **caractérisée en ce qu'**elle comprend un cantre selon l'une des revendications 1 à 10.

12. Procédé de réalisation de pièces en matériau composite comprenant le drapage de fibres sur une surface d'application, **caractérisé en ce que** ledit drapage est réalisé au moyen d'une machine d'application de fibres selon la revendication 11.

## Patentansprüche

1. Gatter für Faserspule, umfassend mindestens ein Modul (2) für eine Faserspule (9), wobei jedes Modul mindestens einen Dorn (21) zur Aufnahme einer Faserspule umfasst, der um eine erste Drehachse (A1) drehbar montiert ist, und ein System zur Spannkontrolle (3) der Faser, **dadurch gekennzeichnet, dass** das System zur Spannkontrolle für jedes Modul umfasst
- eine Abwickelrolle (31), die um eine zweite Drehachse (A2), parallel zur ersten Achse (A1) drehbar montiert ist,
- eine Schwinge (33), die um eine dritte Drehachse (A3) senkrecht zur ersten Achse und zur zweiten Achse, schwenkbar montiert ist, und an ihrem Ende eine Schwingscheibe (32) tragend, die um eine vierte Achse (A4) parallel zur dritten Achse, drehbar montiert ist, und
- eine Umlenkscheibe (34), die um eine fünfte Drehachse (A5), parallel zur vierten Achse, drehbar montiert ist, die zwischen der Abwickelrolle (31) und der Schwingscheibe (32) angeordnet ist,
wobei die von der Spule abgewickelte Faser (91) über die Abwickelrolle (31), die Schwingscheibe (32) und dann die Umlenkscheibe (34) läuft, wobei die Drehung des ersten Dorns (21) in Abhängigkeit von der Position der Schwinge (33) kontrolliert wird.

2. Gatter nach Anspruch 1, **dadurch gekennzeichnet, dass** bei jedem Modul die erste Achse (A1) des ersten Dorns (31) und die zweite Achse (A2) der Abwickelrolle (31) parallel zu einer ersten Richtung (Y) sind,
- die zweite Achse (A2) der Abwickelrolle von der ersten Achse (A1) des ersten Dorns in eine zweite Richtung (X), senkrecht zu der ersten Richtung, versetzt ist,
- die vierte Achse (A4) der Schwingscheibe (32) und die fünfte Achse (A5) der Umlenkscheibe (34) im Verhältnis zur Abwickelrolle in eine dritte Richtung (Z) senkrecht zu der ersten und zweiten Richtung versetzt sind.

3. Gatter nach Anspruch 1 oder 2, **dadurch gekennzeichnet, dass** die Schwingscheibe (32) und die Umlenkscheibe (34) in einer im Wesentlichen tangentialen Ebene zu der zylindrischen Oberfläche der Abwickelrolle (31) angeordnet sind.

4. Gatter nach einem der Ansprüche 1 bis 3, **dadurch gekennzeichnet, dass** die dritte, vierte und fünfte Achse (A3, A4, A5) in der zweiten Richtung (X) angeordnet sind, die im Wesentlichen horizontal ist, wobei der Faserweg zwischen der Abwickelrolle (31), der Schwingscheibe (32) und der Umlenkscheine (34) in einer im Wesentlichen vertikalen Ebene durchgeführt wird.

5. Gatter nach einem der Ansprüche 2 bis 4, **dadurch gekennzeichnet, dass** das Gatter mindestens zwei Module umfasst, die umgekehrt in der dritten Richtung (Z) angeordnet sind.

6. Gatter nach einem der Ansprüche 1 bis 5, **dadurch gekennzeichnet, dass** jedes Modul (2) einen Motor (23) umfasst, der imstande ist, den ersten Dorn (21) in Drehung zu versetzen, wobei der Motor kontrolliert wird, um den ersten Dorn (21) in Abhängigkeit von der Position der Schwinge (33) in Drehung zu versetzen.

7. Gatter nach einem der Ansprüche 1 bis 6, **dadurch gekennzeichnet, dass** jedes Modul (2) einen Zylinder (35) umfasst, der mit der Schwinge verbunden ist, wobei der Zylinder mit einem Positionssensor (35a) ausgerüstet ist, wobei die Drehung des ersten Dorns (21) in Abhängigkeit von der Position des von dem Positionssensor detektierten Zylinders kontrolliert wird.

8. Gatter nach einem der Ansprüche 1 bis 7, **dadurch gekennzeichnet, dass** jedes Modul (2) weiter einen Durchmessersensor (39) umfasst, der imstande ist, den Durchmesser der Faserspule (9), die auf dem ersten Dorn (21) platziert ist, zu detektierten, wobei der Motor (31) kontrolliert ist, um den ersten Dorn (21) in Abhängigkeit von dem durch den Durchmessersensor (33) detektierten Durchmesser in Drehung zu versetzen.

9. Gatter nach einem der Ansprüche 1 ä 8, **dadurch gekennzeichnet, dass** jedes Modul (2) weiter einen zweiten Dorn (22) zur Aufnahme einer Spule zum Rückspulen der Trennfolie einer Faserspule umfasst.

10. Gatter nach einem der Ansprüche 1 ä 9, **dadurch gekennzeichnet, dass** die Abwickelrolle (31) mit einer Längsstange (40) ausgerüstet ist, um die Faser auf der Abwickelrolle zu führen, wobei die Stange zwischen einer abgespreizten Position und einer Klemmposition verschiebbar ist, um die Faser bei Anfügearbeiten zwischen der Stange und der Rolle zu klemmen.

11. Maschine zum Anlegen von Fasern, **dadurch gekennzeichnet, dass** sie ein Gatter nach einem der Ansprüche 1 bis 10 umfasst.

12. Verfahren zur Herstellung von Werkstücken aus Verbundmaterial, welches das Drapieren von Fasern auf einer Anlegeoberfläche umfasst, **dadurch gekennzeichnet, dass** das Drapieren anhand einer Maschine zum Anlegen von Fasern nach Anspruch 11 realisiert wird.

## Claims

1. Creel for fiber bobbin comprising at least one module (2) for a fiber bobbin (9), each module comprising at least a first mandrel (21) for receiving a fiber bobbin, mounted to rotate around a first rotation axis (A1), and a fiber tension control system (3), **characterized in that**, for each module, the tension control system comprises
- an unwinding roller (31) mounted to rotate around a second rotation axis (A2) parallel to the first axis (A1),
- an oscillating arm (33) pivotally mounted around a third rotation axis (A3) perpendicular to the first axis and to the second axis, and carrying at its end an oscillating pulley (=32) mounted to rotate around a fourth axis (A4) parallel to the third axis, and
- a return pulley (34) mounted to rotate around a fifth rotation axis (A5), parallel to the fourth axis, positioned between the unwinding roller (31) and the oscillating pulley (32),
the fiber (91) unwound from the bobbin passing over the unwinding roller (31), the oscillating pulley (32) then the return pulley (34), the rotation of the first mandrel (21) being controlled as a function of the position of the oscillating arm (33).

2. Creel according to claim 1, **characterized in that**, for each module, the first axis (A1) of the first mandrel (31) and the second axis (A2) of the unwinding roller (31) are parallel to a first direction (Y),
- the second axis (A2) of the unwinding roller is offset from the first axis (A1) of the first mandrel in a second direction (X), perpendicular to the first direction,
- the fourth axis (A4) of the oscillating pulley (32) and the fifth axis (A5) of the return pulley (34) are offset in relation to the unwinding roller in a third direction (Z) perpendicular to the first and second directions.

3. Creel according to claim 1 or 2, **characterized in that** the oscillating pulley (32) and the return pulley (34) are positioned along a plane substantially tangent to the cylindrical surface of the unwinding roller (31).

4. Creel according to one of claims 1 to 3, **characterized in that** the third, fourth and fifth axes (A3, A4, A5) are positioned following the second direction (X) which is substantially horizontal, the fiber path between the unwinding roller (31), the oscillating pulley (32) and the return pulley (34) being along an substantially vertical plane.

5. Creel according to one of claims 2 to 4, **characterized in that** the creel comprises at least two modules positioned in the opposite direction in the third direction (Z).

6. Creel according to one of claims 1 to 5, **characterized in that** each module (2) comprises a motor (23) capable of driving the first mandrel (21) in rotation, the motor being controlled to rotationally drive the first mandrel (21) as a function of the position of the oscillating arm (33).

7. Creel according to one of claims 1 to 6, **characterized in that** each module (2) comprises a cylinder (35) connected to the oscillating arm, said cylinder being equipped with a position sensor (35a), the rotation of the first mandrel (21) being controlled as a function of the position of the cylinder detected by said position sensor.

8. Creel according to one of claims 1 to 7, **characterized in that** each module (2) further comprises a diameter sensor (39) capable of detecting the diameter of the fiber bobbin (9) placed on the first mandrel (21), the motor (31) being controlled to rotationally drive the first mandrel (21) as a function of the diameter detected by said diameter sensor (33).

9. Creel according to one of claims 1 to 8, **characterized in that** each module (2) further comprises a second mandrel (22) for receiving a bobbin for rewinding the backing film from a fiber bobbin.

10. Creel according to one of claims 1 to 9, **characterized in that** the unwinding roller (31) is equipped with a longitudinal bar (40) for guiding the fiber onto said unwinding roller, said bar being able to move between a remote position and a pinching position for pinching the fiber between the bar and the roller during splicing operations.

11. Fiber application machine, **characterized in that** it comprises a creel according to one of claims 1 to 10.

12. Method for the production of composite material parts comprising the laying up of fibers onto an application surface, **characterized in that** said laying up is performed by means of a fiber application machine according to claim 11.
